# EUROPÄISCHE PATENTSCHRIFT

(11) **EP 2 178 201 B1**
(45) Veröffentlichungstag und Bekanntmachung des Hinweises auf die Patenterteilung: **10.08.2016**
(21) Anmeldenummer: 08166884.0
(22) Anmeldetag: 17.10.2008
(51) Int. Cl.: H02P 27/04, H02M 5/293, H02M 1/00

(54) **Verfahren und Steuersystem zum Umformen einer Speisewechselspannung in eine Verbraucher-Betriebsspannung mit einstellbarem Effektivwert**
Method and control system for transforming an AC voltage into a consumer supply voltage with adjustable rms value
Procédé et système de commande pour transformer une tension d'alimentation C.A. dans une tension de consommation C.A. avec une valeur efficace variable

(43) Veröffentlichungstag der Anmeldung: 21.04.2010
(73) Patentinhaber: ebm-papst Mulfingen GmbH & Co. KG, 74673 Mulfingen (DE)
(72) Erfinder: Krotsch, Jens, 97996, Niederstetten (DE); Neber, Markus, 74653, Künzelsau (DE)
(74) Vertreter: Peter, Julian

(56) Entgegenhaltungen:
- EP-A- 1 343 357
- DE-U1- 29 707 902
- JP-A- S58 151 896
- US-A- 4 382 218
- US-A- 4 633 161
- US-A- 5 498 946
- US-A- 5 629 607
- US-A- 5 760 553

## Beschreibung

Die vorliegende Erfindung betrifft zunächst gemäß dem Oberbegriff des Anspruchs 1 ein Verfahren zum Umformen einer insbesondere einphasigen oder auch mehrphasigen, über ihren Phasenwinkel insbesondere sinusförmigen Speisewechselspannung in eine bezüglich ihres Effektivwertes einstellbare Betriebsspannung für einen Elektromotor, insbesondere für einen Einphasen-Asynchronmotor zwecks Drehzahlstellung. Ein solches Verfahren ergibt sich aus dem Dokument US-A-5498946.

Ferner betrifft die Erfindung auch ein Steuersystems gemäß dem Oberbegriff des Anspruchs 8 mit einer in Reihe zum jeweiligen Verbraucher liegenden Stellereinrichtung. Zu einem solchen Steuersystem wird auf das Dokument EP 1 343 357 A2 vermiesen.

Die Erfindung bezieht sich speziell auf die Bereitstellung einer Betriebsspannung für induktive oder kapazitive Verbraucher, insbesondere für Einphasen-Asynchronmotoren, wie z. B. Kondensatormotoren oder Spaltpolmotoren, könnte ober grundsätzlich auch für Ohm'sche Lasten angewandt werden.

Es ist bekannt, eine Speisewechselspannung, insbesondere eine sinusförmige Netzwechselspannung, über eine Stellereinrichtung in eine bezüglich ihres Effektivwertes einstellbare Betriebsspannung umzuformen.

JP,58-151896,A offenbart ein Verfahren, bzw. eine Vorrichtung zur Steuerung eines Wechselstromelektromotors wobei die lineare Ansteuerung mittels eines Transistors und die Phasenanschnittsteuerung mittels von Thyristoren miteinander kombiniert werden.

Das eingangs genannte Dokument US-A-5 498 946 bzw. die korrespondierende Veröffentlichung DE 694 03 730 T2 beschreibt eine Vorrichtung - und implizit auch ein Verfahren - zum Steuern der Leistungs- und/oder Geschwindigkeitsänderung einer Last, wie eines Asynchron-, Synchron-, Universalmotors, eines Umformers, einer Induktanz, eines Kondensators oder eines Widerstands, die einen auf einer Phase einer Ein- bzw. Mehrphasen-Wechselstromversorgungsschaltung installierten Schalter, der Zweirichtungsart mit MOS-, IGBT- oder zweipoligem Transistor, umfasst, wobei diesem Schalter Mittel zum Steuern des zyklischen Verhältnisses α/T zugeordnet sind, wobei α der Dauer der Öffnung bzw. Schließung der Schaltung durch den Schalter und T der Periode derjenigen Phase, auf der dieser letzte installiert ist, entsprechen. Dabei sind dem Schalter Schaltungszeitsteuermittel zugeordnet, die geeignet sind, die Schaltungszeit bei der Schließung so zu verlängern, dass sie innerhalb eines Bereiches zwischen 10 Mikrosekunden und 1 Millisekunde liegt, während die Mittel zum Steuern des zyklischen Verhältnisses α/T außerdem Mittel bilden, die geeignet sind, das Öffnung der Wechselstromversorgungsschaltung über den Schalter zu steuern, wenn man sich im koerzitiven Feld des Magnetkreises der Last befindet, d. h. während einer Höchstzeit nach dem Umkehr der Stromrichtung, die einem Viertel einer Halbperiode T entspricht, solange eine Nennstrom-Auslöseschwelle, die einem Drittel des Höchstnennstromwertes entspricht, unterschritten ist.

Das Dokument EP 1 343 357 A2 beschreibt einen elektronischen Dimmer zum Regulieren der Spannungsversorgung einer Last, wobei eine Anwendung speziell für Elektromotoren nicht genannt ist, vielmehr geht es hauptsächlich um eine Steuerung von Leuchten. Dieser bekannte Dimmer arbeitet mit einer digitalen Auswertungs- und Steuereinheit, die einen Rampengenerator ansteuert. Der Dimmer umfasst einen IGBT (insulated gate bipolar transistor) mit mehreren Betriebszuständen. In einem ersten Betriebszustand ist er ausgeschaltet und erlaubt keinen Stromfluss. In einem zweiten Betriebszustand ist er eingeschaltet und lässt folglich einen Strom zu, der durch eine angeschlossene Schaltung begrenzt wird. In einem dritten, linearen Betriebszustand wird ein Strom zugelassen, der begrenzt wird auf einen Wert proportional zur Gate-Spannung. Der IGBT ist an eine Gleichrichterbrücke angeschlossen. Der Rampengenerator erzeugt ein Rampenspannungssignal, welches über einen Ausgang dem Gate des IGBT zugeführt wird, um den IGBT in einem linearen Bereich zu betreiben.

Auch die ähnlichen Veröffentlichungen US-A-5 629 607 und US-A-4 633 161 betreffen Lichtdimmer und keine Versorgung für einen Elektromotor.

Weiterhin sind so genannte Linearsteuerungen bekannt wobei die in Reihe zum Verbraucher liegende Stellereinrichtung als veränderbarer Vorwiderstand ausgebildet ist. Dadurch kann die Betriebsspannung bei weiterhin sinusförmigem Verlauf bezüglich ihrer Amplitudenhöhe eingestellt werden, so dass sich auch der Effektivwert als Flächenintegral ändert. Die Betriebsspannung verkleinert sich mit Vergrößerung des veränderbaren Widerstandes. Geht der Widerstand gegen unendlich, liegt am Verbraucher keine Spannung an; wird der Widerstand auf 0 Ω verkleinert, liegt am Verbraucher die ursprüngliche Speisewechselspannung an, Vorteil einer solchen Linearsteuerung ist vor allem der stets sinusförmige Verlauf der Betriebsspannung, so dass im Falle der Versorgung eines Elektromotors ein ruhiger Lauf mit idealem Geräuschverhalten erreicht wird, Nachteilig ist allerdings eine hohe Verlustleistung am Steller, und zwar vor allem wenn die Spannungen am Steiler und am Verbraucher etwa gleich groß sind. Zudem muss der Stellerwiderstand auf die maximale Verlustleistung ausgelegt sein, was zu einer großen Bauform und zu hohen Kosten führt.

Weiterhin ist eine Phasenanschnittsteuerung bekannt, wobei die Stellereinrichtung im Wesentlichen aus einem Triac besteht, der über eine Steuereinheit derart ansteuerbar ist, dass am Anfang jeder Sinushalbwelle ein in seiner Breite (Phasenwinkel) variabler Teil jeder Sinushalbwelle weggeschnitten wird, so dass die verbleibenden Reste der Halbwellen zu einem veränderbaren Effektivwert als Flächenintegral führen. Der Effektivwert sinkt mit zunehmendem Anschnittwinkel. Der Vorteil einer Phasenanschnittsteuerung gegenüber einer Linearsteuerung ist eine geringere Verlustleistung am Steller und ein hoher Grundschwingungsgehalt bis zu einem bestimmten Phasenanschnitt von ca. 72°. Ferner sind der Schaltungsaufwand relativ gering und die Baugröße klein. Sehr nachteilig ist aber der nicht stetige, d. h. nicht mehr sinusförmige Verlauf der Betriebsspannung und des daraus resultierenden Stromes am Verbraucher. Die nicht sinusförmige Belastung kann im Versorgungsnetz Störungen hervorrufen. Ab einem bestimmten Phasenanschnittwinkel von z. B. > 72° verkleinert sich der Anteil des Grundschwingungsgehaltes, wodurch der Anteil der Oberschwingungen zunimmt. Als Nachteil stellt sich besonders für Elektromotoren das hierdurch entstehende Geräusch heraus, das als sehr unangenehmes "Brummen" wahrgenommen wird. Dies ist insbesondere bei Lüfterantrieben sehr störend.

Als technisch eigentlich beste Lösung werden häufig auch Frequenzumrichter eingesetzt. Mit einem Gleichrichter, einem so genannten Zwischenkreis und einem Pulswechselrichter wird eine nahezu sinusförmige Betriebsspannung mit bestimmter Frequenz und Amplitude generiert. Für die Anwendung zur Drehzahlstellung von Einphasen-Asynchronmotoren ergibt sich ein idealer Wirkungsgrad. Allerdings ist der Schaltungsaufwand sehr groß, so dass ein Frequenzumrichter für viele Anwendungen schlichtweg zu teuer ist.

Ähnliches gilt auch für so genannte AC-Chopper, wobei durch Pulsweitenmodulation der Speisewechselspannung (Netzspannung) mit Frequenzen im kHz-Bereich lediglich die Amplitude der Verbraucher-Betriebsspannung vorgegeben wird. Der Schaltungsaufwand ist mit dem eines Frequenzumrichters vergleichbar. Für die Reduzierung von Störaussendungen aufgrund des gepulsten Verfahrens sind aufwändige Maßnahmen erforderlich, wodurch sich diese Lösung zur Drehzahlstellung von Einphasen-Asynchronmotoren ebenfalls als zu teuer erweist.

Der vorliegenden Erfindung liegt die Aufgabe zu Grunde, ein Verfahren der genannten Art anzugeben und ein entsprechendes Steuersystem zu schaffen, womit eine Minimierung der Verlustleistung bei gleichzeitig optimiertem Geräuschverhalten durch Minimierung des Oberschwingungsgehaltes der Betriebsspannung erreicht werden kann, und zwar mit einem geringen und kostengünstigen technischen Aufwand.

Erfindungsgemäß wird dies durch ein Verfahren nach Anspruch 1, bzw. durch ein Steuersystem nach Anspruch 6 erreicht. Vorteilhafte Ausgestaltungen sind in den abhängigen Ansprüchen enthalten. Die Speisewechselspannung ist über den Verlauf des Phasenwinkels bezüglich ihrer jeweiligen Augenblickswerte anhand mindestens einer vorgegebenen Funktion jeweils um einen in Abhängigkeit vom Phasenwinkel in einem Bereich von 0 bis 1 vorgegebenen Faktor veränderbar, so dass die Betriebsspannung über den Phasenwinkel hinweg mit einem durch die Funktion beliebig vorgebbaren Verlauf aus Augenblickswerten von 0 % bis 100 % der zugehörigen Augenblickswerte der Speisewechselspannung generierbar ist. Dazu wird die Speisewechselspannung über ein bezüglich seiner Leitfähigkeit gesteuert veränderbares Stellglied in die Betriebsspannung umgeformt, wobei dem Stellglied Soll-Augenblickswerte für die Betriebsspannung vorgegeben werden, wobei die Soll-Augenblickswerte durch Multiplikation der jeweiligen Augenblickswerte der Speisewechselspannung mit zugehörigen, durch die Funktion definierten, beispielsweise in einer Wertetabelle abgelegten Aussteuergradwerten bestimmt werden.

Die dem jeweiligen Verbraucher in Reihe vorzuschaltende Stellereinrichtung besteht aus einem über den Phasenwinkel hinweg bezüglich seiner Leitfähigkeit gesteuert über einen Stellbereich von 0 % bis 100 % auf unterschiedliche Werte und Zwischenwerte veränderbaren Stellglied, und dieses Stellglied wird von einer Steuereinheit in Abhängigkeit vom Phasenwinkel der Speisewechselspannung anhand mindestens einer in einem Speicher abgelegten Funktion mit Aussteuergradwerten derart angesteuert, dass die Betriebsspannung über den Phasenwinkel hinweg mit einem durch die Funktion beliebig vorgegebenen oder vorgebbaren Verlauf aus Augenblickswerten von 0 % bis 100 % von zugehörigen Augenblickswerten der Speisewechselspannung generierbar ist. Dabei definiert die bzw, jede für einen bestimmten Effektivwert der Betriebsspannung konzipierte und in dem Speicher abgelegte Funktion Aussteuergradwerte als Faktoren im Bereich von 0 bis 1 als Funktion vom Phasenwinkel der Speisewechselspannung, wobei die Augenblickswerte der Speisewechselspannung über einen Multiplikator mittels der Aussteuergradwerte veränderbar sind. Die/jede Funktion kann beispielsweise in Form einer gespeicherten Wertetabelle hinterlegt sein. Alternativ können die Aussteuergradwerte auch durch einen hinterlegten Algorithmus jeweils aktuell ("online") in Abhängigkeit vom Phasenwinkel berechnet werden.

Durch die Erfindung ist es möglich, die Betriebsspannung mit technisch einfachen und kostengünstigen Mitteln "synthetisch" mit einem praktisch beliebigen Phasenwinkel-Verlauf zu generieren. Dadurch können Phasenverlaufsformen der Betriebsspannung vorgegeben werden, die im Wesentlichen nur die Vorteile von Linear- und Phasenanschnittsteuerung aufweisen, deren Nachteile aber weitgehend vermeiden oder zumindest minimieren. So kann für jeden bestimmten Effektivwert der Betriebsspannung ein eigener, unterschiedlicher Phasenverlauf anhand einer von mehreren unterschiedlichen Funktionen generiert werden, so dass über den ganzen Stellbereich der Betriebsspannung hinweg eine Minimierung einer Steller-Verlustleistung sowie eine Minimierung eines Oberschwingungsgehaltes der Betriebsspannung erreicht werden. Dazu enthält der Speicher Mittel zur Ablage einer entsprechenden Anzahl von Funktionen (z. B. Wertetabellen, Algorithmen), die jeweils für einen bestimmten Effektivwert bei gleichzeitig optimiertem Phasenverlauf ausgelegt sind. Von den gespeicherten Funktionen kann dann durch Vorgabe eines Stellsignals (Drehzahl-Stellsignal im Falle eines Motors) jeweils eine bestimmte Funktion ausgewählt werden, die dann zur Steuerung des Stellgliedes verwendet wird,

Die Erfindung lässt sich auch relativ wirtschaftlich realisieren, indem das Stellglied eine in Reihe mit dem Verbraucher zu schaltende Leistungshalbleiter-Anordnung aufweist, die vorzugsweise aus zwei entgegengesetzt in Reihe geschalteten Leistungshalbleitern besteht. Die Leistungshalbleiter-Anordnung ist hinsichtlich ihrer Leitfähigkeit stufenlos verstellbar.

Im Folgenden soll die Erfindung anhand von einigen Ausführungsbeispielen noch genauer erläutert werden. Es zeigen:
- Fig. 1: ein vereinfachtes Prinzip-Blockschaltbild eines erfindungsgemäßen Steuersystems in einer Minimalausführung,
- Fig. 2 - 4: Diagramme zur Erläuterung des erfindungsgemäßen Prinzips anhand von drei möglichen Beispielen für den zu generierenden Phasenverlauf der Betriebsspannung,
- Fig. 5: ein gegenüber Fig. 1 detaillierteres Schaltbild in einer weiteren Ausgestaltung des erfindungsgemäßen Steuersystems,
- Fig. 6: ein genaueres Schaltbild einer Stellereinrichtung in einer bevorzugten Ausgestaltung,
- Fig. 7: ein Spannungsdiagramm mit einem beispielhaften Phasenverlauf der generierten Betriebsspannung relativ zur Speisewechselspannung (Netzspannung),
- Fig. 8: ein weiteres Schaltbild eines erfindungsgemäßen Systems ähnlich Fig. 5 in einer Ausgestaltung zur Variation des Effektivwertes, insbesondere zwecks Drehzahleinstellung eines Asynchronmotors,
- Fig. 9u.10: jeweils in einander gegenübergestellten Teilfiguren a) und b) mögliche Verläufe von Aussteuergradwerten über den Phasenwinkel und daraus resultierenden Betriebsspannungen zur weiteren Erläuterung des erfindungsgemäßen Prinzips,
- Fig. 11 u.12: weitere Diagramme ähnlich Fig. 9 und 10, die allerdings nicht dem erfinderischen Prinzip entsprechen
- Fig. 13: Diagramme zur Erläuterung einer besonderen Wirkungsweise der vorteilhaften Ausgestaltung des Systems gemäß Fig. 8 und
- Fig.14: eine weitere Ausführungsvariante des erfindungsgemäßen Steuersystems in einer Darstellung ähnlich Fig. 5 und 8, wobei die Betriebsspannung mittelbar über eine Vorgabe und Regelung des Verbraucher-Stromes generiert wird.

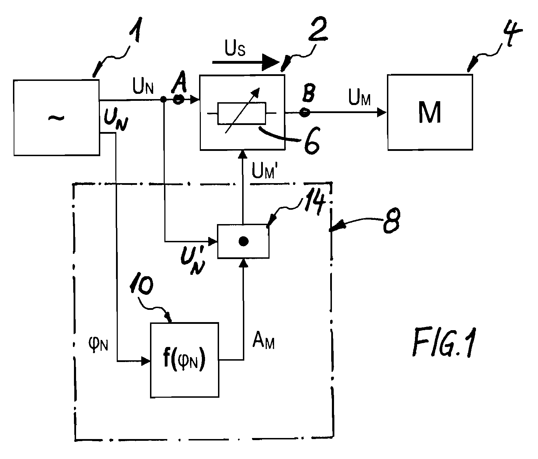

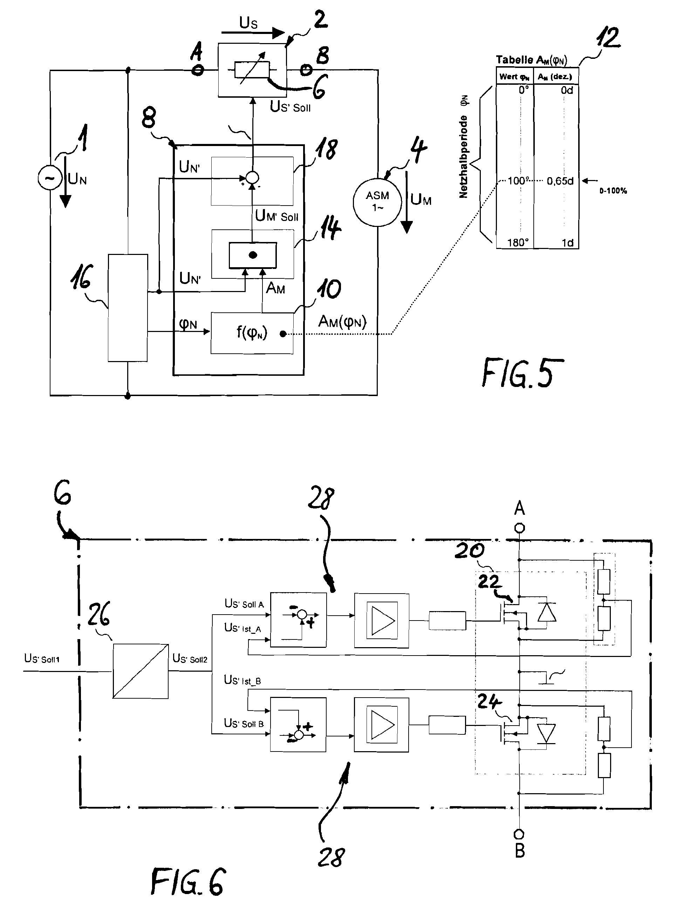

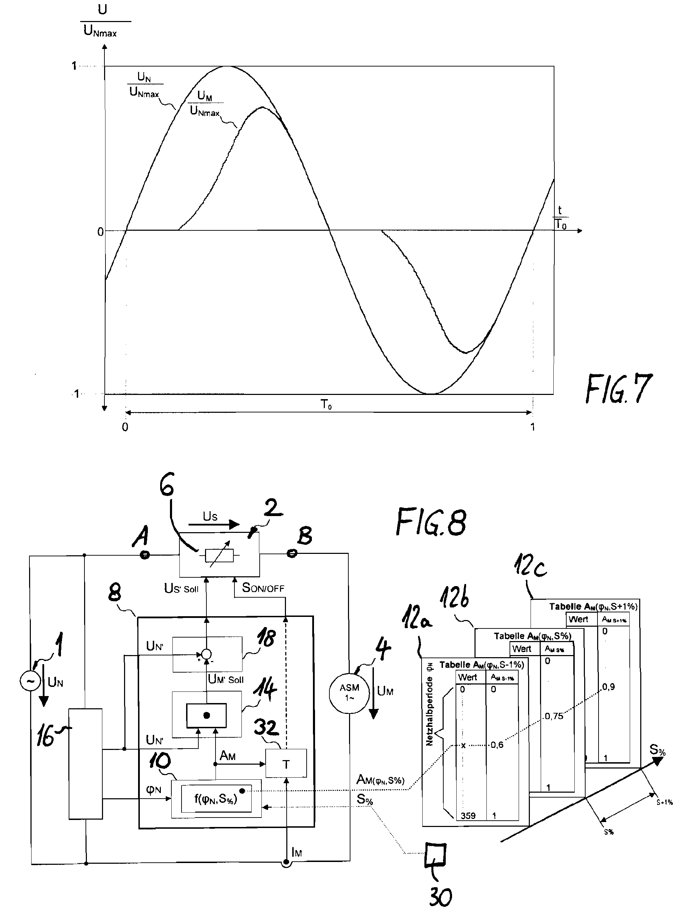

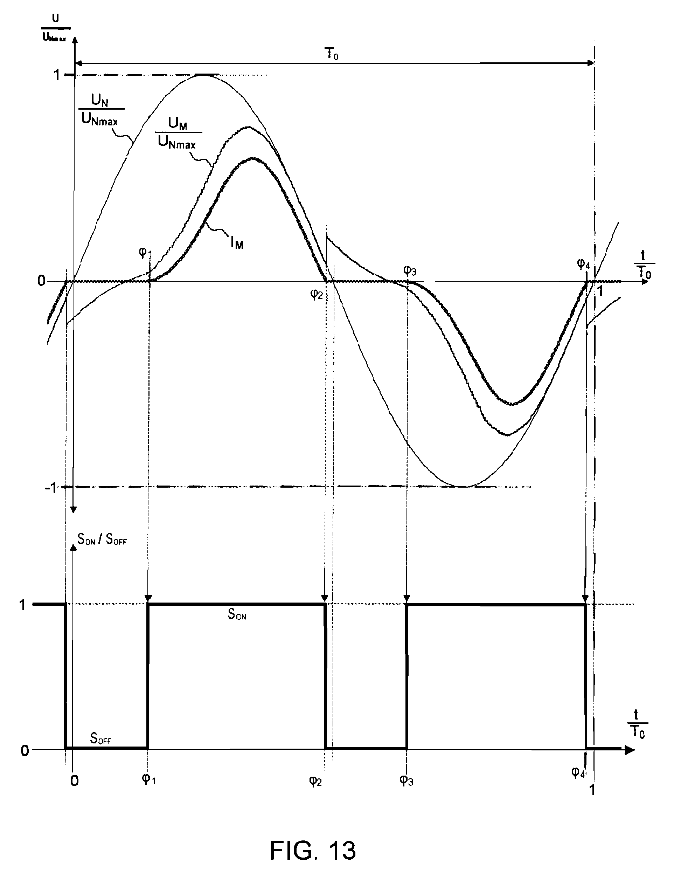

Wie sich zunächst aus Fig. 1 ergibt, soll eine einphasige, sinusförmige Speisewechselspannung U_{N}, in aller Regel eine übliche Versorgungs-Netzspannung eines vereinfacht als Spannungsquelle 1 dargestellten Wechselspannungsnetzes, über eine Stellereinrichtung 2 in eine bezüglich ihres Effektivwertes einstellbare Betriebsspannung U_{M} für einen elektrischen Verbraucher 4 umgeformt werden. Die Stellereinrichtung 2 ist dazu dem Verbraucher 4 in Reihe vorgeschaltet. Die Speisewechselspannung U_{N} verläuft über ihren Phasenwinkel ϕ_{N} hinweg insbesondere sinusförmig, siehe hierzu beispielsweise Fig. 7 und 13, wo der Phasenverlauf normiert durch das Verhältnis U_{N} : U_{Nmax} dargestellt ist. Als Verbraucher 4 soll insbesondere ein Elektromotor M (Fig. 1) bzw. konkreter ein Einphasen-Asynchronmotor ASM (Fig. 5, 8 und 14) angesteuert werden.

Erfindungsgemäß besteht dazu die Stellereinrichtung 2 aus einem speziellen Stellglied 6, das in den Zeichnungen vereinfacht mit dem Symbol eines verstellbaren Widerstands eingezeichnet ist. Allerdings handelt es sich nicht um einen einfachen Vorwiderstand, vielmehr ist das Stellglied 6 - siehe dazu auch das genauere Beispiel in Fig. 6 - hinsichtlich seiner Leitfähigkeit bzw. seines inneren Widerstandes derart schnell verstellbar, dass es über den Phasenwinkel ϕ_{N} hinweg bezüglich seiner Leitfähigkeit gesteuert über einen Stellbereich von 0 % bis 100 % auf unterschiedliche Werte und Zwischenwerte veränderbar ist. Dabei wird erfindungsgemäß das Stellglied 6 von einer Steuereinheit 8 in Abhängigkeit vom Phasenwinkel ϕ_{N} mit so genannten Aussteuergradwerten AM anhand mindestens einer in einem Speicher 10 abgelegten Funktion AM = f (ϕ_{N}) derart angesteuert, dass die Betriebsspannung U_{M} über den Phasenwinkel ϕ_{N} hinweg mit einem durch die hinterlegte Funktion beliebig vorgegebenen bzw. vorgebbaren Verlauf aus Augenblickswerten U_{M}' von 0 % bis 100 % von zugehörigen Augenblickswerten U_{N}' der Speisewechselspannung U_{N} generiert werden kann. Dabei kann die jeweilige Funktion AM = f (ϕ_{N}) beispielsweise in Form einer Wertetabelle 12 (12a, b, c) im Speicher 10 abgelegt sein (vgl. Fig. 5, 8 und 14).

Wie sich weiter aus Fig. 1 ergibt, berechnet ein Multiplikator 14 aus den jeweiligen Aussteuergradwerten AM und den aktuellen Ist-Werten (Augenblickswerten) U_{N}' der Speisewechselspannung U_{N} die Vorgabe (Sollwert) U_{M}' der Betriebsspannung, die dem Stellglied 6 übergeben wird. Das Stellglied 6 steuert seinen inneren Widerstand entsprechend so, dass die dem Verbraucher 4 zugeführte Betriebsspannung U_{M} der Vorgabe U_{M}' möglichst genau entspricht. Die Spannung über dem Stellglied 6 ist als Stellerspannung U_{S} eingezeichnet; es gilt im Wesentlichen die Gleichung UM = U_{N} - Us.

Wesentlich ist, dass über den Phasenverlauf ϕ_{N} hinweg, d. h. z. B. während einer Periode T₀, eine Variation der Steller-Leitfähigkeit erfolgt, d. h. eine "dynamische Leitfähigkeitsänderung" (im Gegensatz zu einer statischen Einstellung eines Vorwiderstandes bei einer Linearsteuerung).

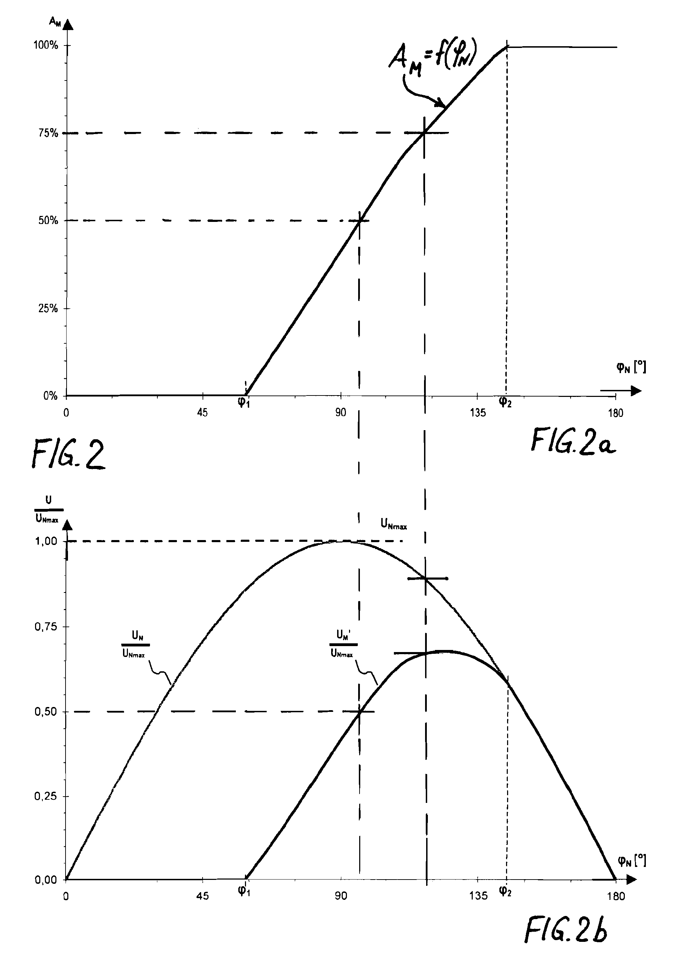

Das erfindungsgemäße Prinzip soll nun anhand der Figuren 2 bis 4 weiter erläutert werden, wobei jeweils nur eine halbe Periode (Halbwelle) im Bereich ϕ = 0 bis 180° dargestellt ist, weil bevorzugt die zweite Halbperiode (Halbwelle) gleichartig (symmetrisch) gesteuert wird. Grundsätzlich wäre es aber auch möglich, ungleiche bzw. asymmetrische Verläufe für die positiven und negativen Halbwellen vorzugeben, auch wenn dies im Allgemeinen den Wirkungsgrad eines Asynchronmotors ASM verschlechtern würde.

In Fig. 2a ist beispielhaft ein möglicher Verlauf des Aussteuergradwertes AM in Abhängigkeit vom Phasenwinkel ϕ_{N} veranschaulicht. In einem ersten Winkelbereich 0° bis ϕ₁ ist der Aussteuergrad 0 % hinterlegt, was bedeutet, dass das Stellglied 6 sperrt, wodurch gemäß Fig. 2b die als normiertes Verhältnis U_{M}' : U_{Nmax} dargestellte Betriebsspannung 0 ist (am Verbraucher 4 liegt keine Spannung an). In einem zweiten Winkelbereich von ϕ₁ bis ϕ₂ wird der Aussteuergrad AM mit einer eigentlich beliebigen Verlaufsform kontinuierlich von 0 % auf 100 % vergrößert, wodurch das Stellglied 6 vom sperrenden in einen zunehmend leitenden Zustand übergeht. Wie beispielhaft in Fig. 2a und b eingezeichnet ist, beträgt bei einem Aussteuergrad AM = 50 % der Augenblickswert der Betriebsspannung U_{M}' ebenfalls 50 % des zugehörigen Augenblickswertes U_{N}' der Speisewechselspannung U_{N}, und bei AM = 75 % ist U_{M}' ebenfalls 75 % von U_{N}'. Ab dem Phasenwinkel ϕ₂ beträgt AM = 1 entsprechend 100 %, so dass die Betriebsspannung U_{M} genau dem Verlauf der Speisewechselspannung U_{N} folgt.

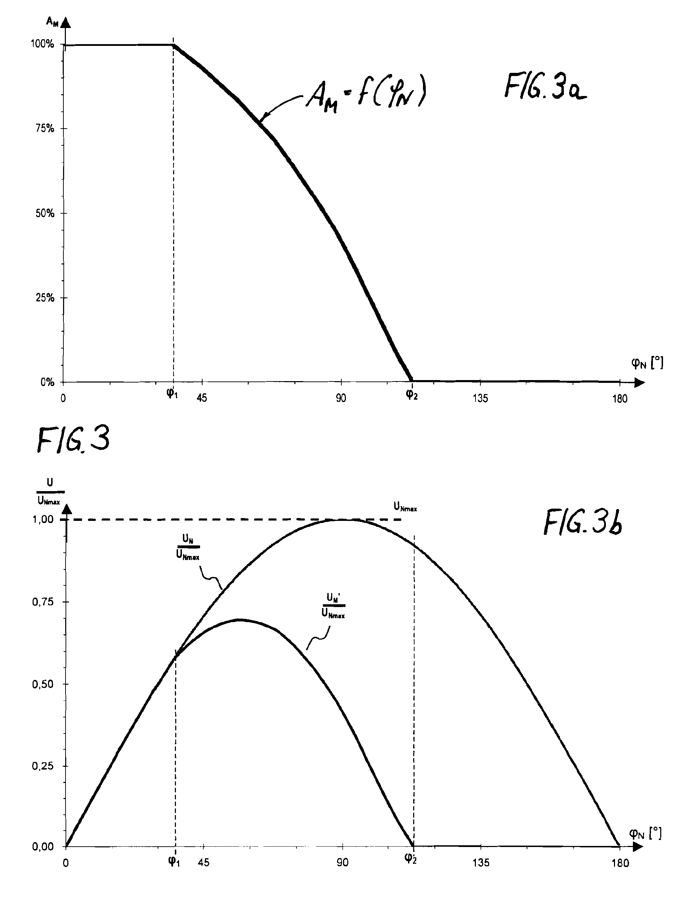

In dem zweiten Beispiel nach Fig. 3 hat die Funktion des Aussteuergrades AM einen umgekehrten Verlauf, wobei im Winkelbereich 0° bis ϕ₁ der Aussteuergrad 100 % hinterlegt ist. Dies bedeutet, dass das Stellglied 6 leitet, wodurch die Betriebsspannung U_{M} dem Verlauf der Speisewechselspannung U_{N} folgt. Im anschließenden Winkelbereich ϕ₁ bis ϕ₂ wird der Aussteuergrad AM nach der hinterlegten Funktion kontinuierlich auf 0 % verkleinert, wodurch das Stellglied 6 vom gänzlich leitenden Zustand über Zwischenwerte in den gänzlich sperrenden Zustand übergeht. Ab dem Winkel ϕ₂ beträgt der Aussteuergrad AM 0 %, so dass die Betriebsspannung U_{M} 0 wird.

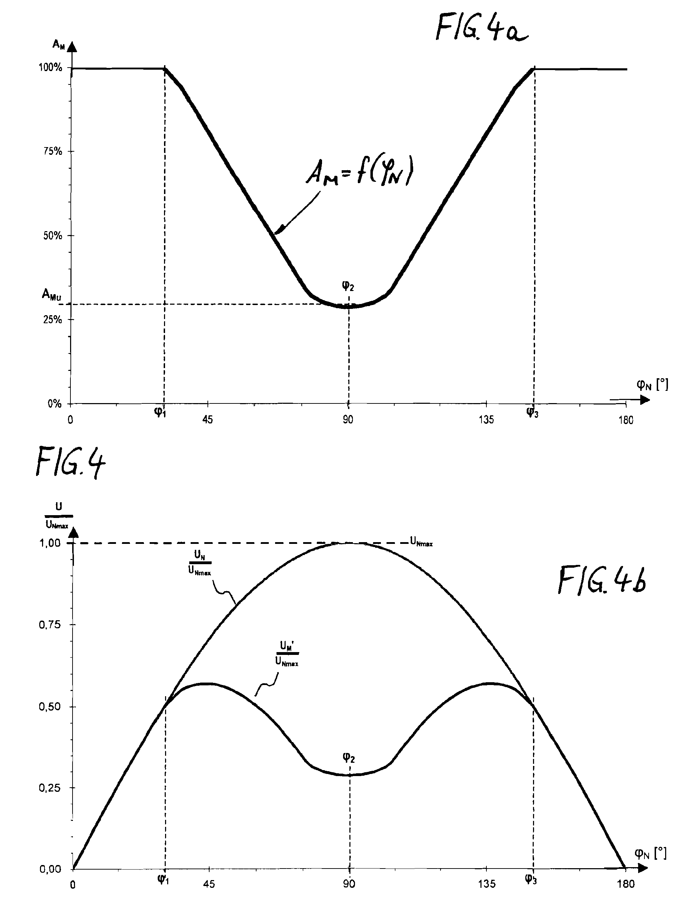

Das dritte Beispiel in Fig. 4 zeigt, dass der Aussteuergrad AM auch anhand einer beliebigen anderen Funktion veränderbar ist. In einem ersten Winkelbereich 0° bis ϕ₁ sowie auch in einem Endbereich zwischen ϕ₃ und 180° ist der Aussteuergrad A_{M} = 100 % hinterlegt, was bedeutet, dass das Stellglied 6 gänzlich leitet, so dass in diesen Winkelbereichen am Anfang und Ende einer Halbwelle die Betriebsspannung U_{M} dem Verlauf der Speisewechselspannung U_{N} folgt. In einem mittleren Winkelbereich von ϕ₁ bis ϕ₂ ist die in Fig. 4a erkennbare Funktion hinterlegt, durch die der Aussteuergrad kontinuierlich bis auf beispielsweise 28,6 % bei ϕ_{N} = 90° verkleinert und anschließend wieder kontinuierlich bis ϕ₃ auf 100 % vergrößert wird. Der daraus resultierende Verlauf der Betriebsspannung ergibt sich aus Fig. 4b.

Es sei bemerkt, dass die Diagramme in Fig. 2 bis 4 rein beispielhaft zu verstehen sind. Neben diesen beispielhaft dargestellten Möglichkeiten für die Vorgabe der Betriebsspannung sind selbstverständlich beliebige andere Verläufe unterhalb der Hüllkurve der Spannung denkbar. Dies bedeutet, dass die Betriebsspannung mit grundsätzlich beliebigem Phasenverlauf generiert werden kann.

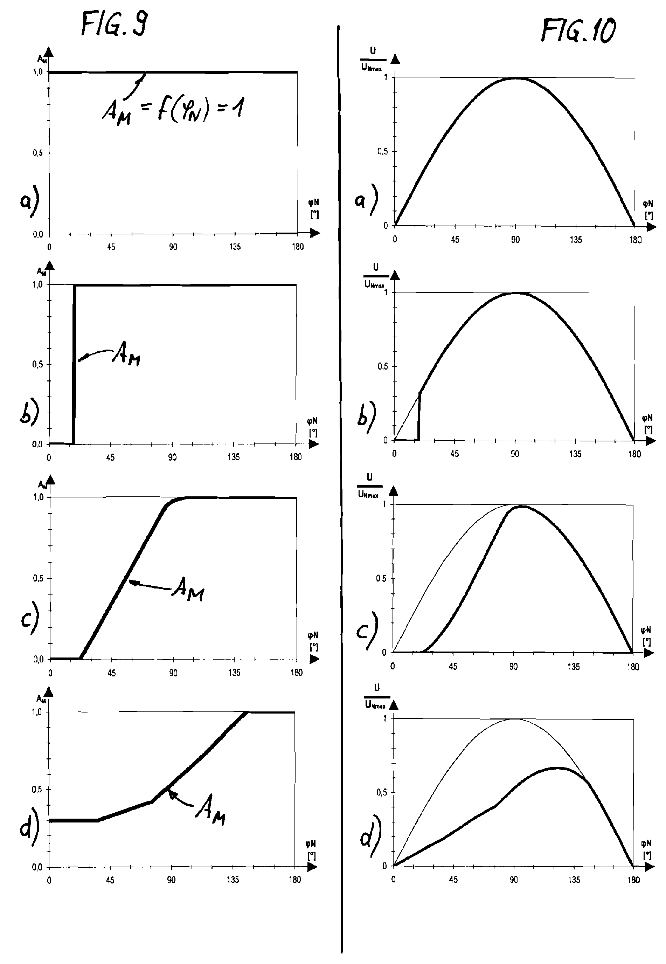

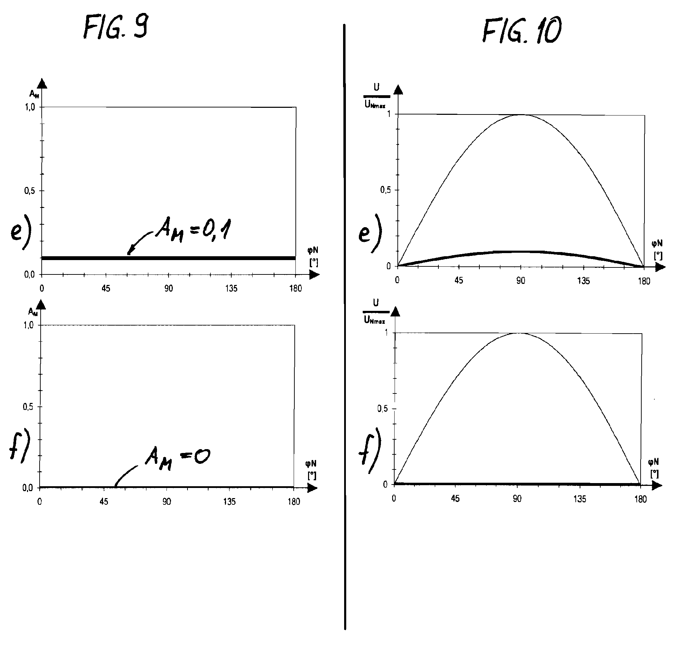

Die Funktionsweise der Erfindung wird in den Fig. 9 und 10 erläutert.

In Fig. 5 ist in konkreterer Form ein weiteres Ausführungsbeispiel des erfindungsgemäßen Steuersystems dargestellt, und zwar in einer gemischten Darstellung als Stromlaufplan und teilweise Blockschaltbild. Mit einer Erfassungsschaltung 16 wird die Speisewechselspannung U_{N} überwacht, und es werden der Phasenwinkel ϕ_{N} und die Augenblickswerte U_{N}' erfasst und der Steuereinheit 8 zur Verfügung gestellt. In dieser Darstellung enthält die Steuereinheit 8 den Speicher 10 als "Funktionsblock" und den Multiplikator 14. Die Aussteuergradwerte AM sind dabei beispielhaft in Form einer Wertetabelle 12 mit vorausberechneten Funktionswerten im Funktionsblock (Speicher 10) abgelegt. Die Funktion kann jedoch selbstverständlich auch als Algorithmus, z. B. in einem Mikrorechner hinterlegt sein, wobei die Funktionswerte in Abhängigkeit vom augenblicklichen Phasenwinkel ϕ_{N} numerisch zur Laufzeit (online) berechnet werden. Hierbei kann die Funktion in geschlossener Form, z. B. als Polynom oder als stückweise stetiger Verlauf, bestehend aus Geraden oder Teilfunktionen höherer Ordnung, beschrieben sein. Ebenso ist die Definition in Form einer Gleichung möglich, die zur Laufzeit (online) numerisch durch ein gängiges Verfahren, z. B. das Newton-Verfahren, gelöst wird. In den folgenden Ausführungsbeispielen wird zur Veranschaulichung lediglich die Funktionsdefinition in Form von gespeicherten Wertetabellen mit vorausberechneten Funktionswerten verwendet. Hierbei sind die hinterlegten Aussteuergradwerte AM als Funktion von ϕ_{N} in der Wertetabelle 12 als Dezimalwerte oder beispielsweise als für einen Mikrocontroller geeignete Binärwerte hinterlegt. Bei diesem Beispiel wird jeder Augenblickswert U_{N}' der Speisewechselspannung mit dem zugehörigen Aussteuergradwert AM in dem Multiplikator 14 multipliziert. Daraus resultiert ein Sollwert U_{M}' der Betriebsspannung. Bei dieser Ausführung nach Fig. 5 ist zusätzlich ein Subtrahierer 18 nachgeschaltet, der durch Substraktion der jeweiligen Augenblickswerte U_{N}' und U_{M}' nach der Gleichung U_{S}' = U_{N}' - U_{M}' eine Vorgabe bzw. einen Sollwert U_{S}' für die Stellerspannung U_{S} berechnet. Das Stellglied 6 steuert dann seinen inneren Widerstand entsprechend dem vorgegebenen Sollwert U_{S}' so, dass U_{S} möglichst genau U_{S}' entspricht.

In Fig. 6 ist beispielhaft eine konkrete Ausführung des Stellgliedes 6 dargestellt. Demnach weist das Stellglied 6 eine Leistungshalbleiter-Anordnung 20 auf, die vorzugsweise aus zwei entgegengesetzt in Reihe geschalteten Leistungshalbleitern 22, 24 besteht. Dabei handelt es sich beispielsweise um MOSFET's. Das Stellglied 6 weist zudem eine integrierte Spannungsregelung 28 auf, die an dieser Stelle nicht genauer erläutert wird. Bevorzugt werden die MOSFET's direkt durch die Spannungsregelung 28 angesteuert. Dabei kann die jeweilige Steuergröße, z. B. der Sollwert U_{S}' Soll 1, über einen Optokoppler 26 galvanisch getrennt zugeführt werden.

In Fig. 7 ist beispielhaft ein möglicher Verlauf für eine generierte Betriebsspannung über eine vollständige Periode T₀ veranschaulicht, und zwar in Relation zur Speisewechselspannung. Hierbei sind die Spannungen jeweils normiert dargestellt. Es ist erkennbar, dass ein relativ harmonischer, bezüglich der Halbwellen praktisch sinusförmiger Verlauf der Betriebsspannung erreicht werden kann.

Was nun die in Fig. 8 dargestellte Ausführungsform des erfindungsgemäßen Steuersystems betrifft, so ist dieses für mehrere bezüglich des Effektivwertes unterschiedliche Phasenverläufe der Betriebsspannung U_{M} ausgelegt. Dies dient insbesondere dazu, die Drehzahl des Motors ASM zu variieren. Dazu weist der Funktionsblock (Speicher 10) Mittel zur Ablage von mehreren, jeweils für einen bezüglich des Effektivwertes unterschiedlichen Phasenverlauf der Betriebsspannung U_{M} ausgelegten Funktionen bzw. Wertetabellen (beispielhaft sind lediglich drei Wertetabellen 12a, b, c dargestellt) auf. Dabei ist jeweils eine der Vielzahl von Funktionen bzw. Wertetabellen über Einstellmittel 30 durch Vorgabe eines Stellsignals S auswählbar. Die weitere Steuerung des Stellgliedes 6 erfolgt dann anhand der jeweils ausgewählten Funktion bzw. Wertetabelle. Der Stellbereich ist in eine Vielzahl von Schritten unterteilt, wobei vorzugsweise innerhalb eines Stellbereiches zwischen jeweils zwei Wertetabellen die Berechnung des Aussteuergrades AM durch Interpolation erfolgt. Dadurch kann der Verlauf des Aussteuergrades AM mit dem Stellsignal S vorteilhafterweise kontinuierlich verändert werden, was zu einer stufenlosen Änderung der Drehzahl bei der Anwendung für einen Asynchronmotor ASM führt.

Im Zusammenhang mit dieser Ausführung wird zweckmäßig die Betriebsspannung U_{M} durch Vorgabe und Auswahl der Wertetabellen 12a, b, c derart generiert, dass über den (Drehzahl-) Stellbereich der Betriebsspannung U_{M} hinweg eine Minimierung einer Steller-Verlustleistung sowie eine Minimierung eines Oberschwingungsgehaltes der Betriebsspannung U_{M} erreicht werden. Auf diese Weise lässt sich eine "Quasi-Linearsteuerung" im unteren Bereich des Effektivwertes der Betriebsspannung bzw. in einem unteren Motor-Drehzahlbereich und eine "Quasi-Phasenanschnittsteuerung" im oberen Spannungs-/ Drehzahlbereich erreichen, allerdings mit stetigen, kontinuierlichen Übergängen. Dadurch kann die Betriebsspannung U_{M} stets mit einem stetigen, zumindest annähernd sinusförmigen und daher geringe Oberschwingungen verursachenden Verlauf generiert werden. Allgemein kann somit eine Kombination der Vorteile von Linear- und Phasenanschnittsteuerung bei weitgehender Vermeidung von deren Nachteilen erreicht werden.

In Fig. 9 und den Teilfiguren a) bis f) sind beispielhaft mehrere Verläufe des Aussteuergrades AM veranschaulicht, wie er in Abhängigkeit vom Stellsignal S in den Wertetabellen hinterlegt und zur Interpolation genutzt werden kann. Die Fig. 10 zeigt in den jeweils zugeordneten Teilfiguren a) bis f) die aus den Aussteuergraden AM gemäß Fig. 9 resultierenden Verläufe der Betriebsspannung U_{M} bzw. deren Sollwert U_{M}', die sich aus der Multiplikation der jeweiligen Augenblickswerte U_{N}' der Speisewechselspannung U_{N} mit dem jeweiligen Aussteuergrad AM ergeben. Durch die Darstellungen soll in einzelnen Schritten das Prinzip der Spannungsvorgabe durch verschiedene hinterlegte Verläufe veranschaulicht werden. Durch Interpolation zwischen den Verläufen des Aussteuergrades AM gemäß Fig. 9a bis f ist innerhalb des Stellbereiches eine kontinuierliche Veränderung der Betriebsspannung in Abhängigkeit vom Stellsignal S möglich. Bei großem Stellsignal S wird beispielsweise über die gesamte Periode oder Halbperiode die volle Speisewechselspannung ausgegeben (Fig. 9a und 10a), oder es wird ein Verlauf analog zu einer Phasenanschnittsteuerung gemäß Fig. 9b und10b verwendet. Bei kleinem Stellsignal S erfolgt zweckmäßig die Vorgabe entsprechend einer Linearsteuerung (Fig. 9e und10e), bis die Betriebsspannung U_{M} am Verbraucher 4 zu Null geworden ist (Fig. 9f und 10f). Dazwischen sind erfindungsgemäß die aus Phasenanschnittsteuerung und Linearsteuerung kombinierten Verläufe beispielsweise gemäß Fig. 9c, 10c und Fig. 9d, 10d hinterlegt. Der Verlauf der Betriebsspannung ändert sich dabei kontinuierlich von
dem ähnlich einer Phasenanschnittsteuerung zu dem ähnlich einer Linearsteuerung.

Von der "Quasi-Phasenanschnittsteuerung" gemäß Fig. 9b, 10b mit einem Sprung im Aussteuergrad AM erfolgt der Übergang zu dem kombinierten Verlauf gemäß Fig. 9c, 10c kontinuierlich, beispielsweise durch Reduzierung der Steigung des Sprunges im Aussteuergrad AM von sehr großen Werten auf die Steigung des Verlaufs gemäß Fig. 9c.

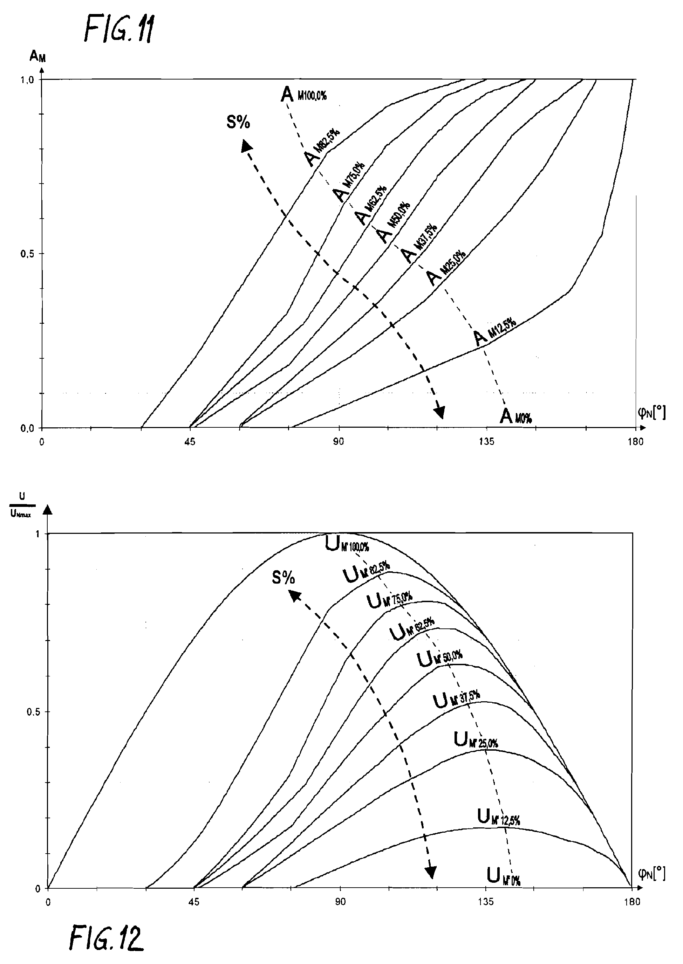

Weitere allerdings nicht in den Schutzumfang der Erfindung fallende Verlaufsformen sind in Fig. 11 und 12 dargestellt. Diese Verläufe sind besonders vorteilhaft für eine Anwendung bei Ventilatoren mit Einphasen-Asynchronmotor. Im Vergleich zu Fig. 9 und 10 wurden gemäß Fig. 11 und 12 nur Verläufe hinterlegt, die praktisch eine Kombination von Phasenanschnittsteuerung und Linearsteuerung darstellen. Diese hinterlegten Funktionen des Aussteuergrades AM führen durch ihre geringe Steigung zu einem gegenüber der reinen Phasenanschnittsteuerung deutlich besseren Geräuschverhalten, welches mit dem einer Linearsteuerung vergleichbar ist, jedoch bei wesentlich geringeren Verlusten als bei Linearsteuerung.

Im Folgenden soll noch eine besondere Ausgestaltung anhand des Beispiels gemäß Fig. 8 erläutert werden. Demnach weist das Steuersystem bzw. die Steuereinheit 8 eine zusätzliche Schalteinrichtung 32 auf, mit der das Stellglied 6 in Abhängigkeit vom Phasenverlauf des aus der Betriebsspannung U_{M} resultierenden Verbraucherstromes I_{M} jeweils über einen bestimmten Phasenwinkel ϕ₂ - ϕ₃ (s. dazu das Diagramm in Fig. 13) hinweg deaktivierbar, d. h. in einen gänzlich sperrenden, hochohmigen Zustand schaltbar ist. Dabei handelt es sich um ein "hartes Abschalten" im Gegensatz zu einer Ansteuerung mit einem Aussteuergrad AM = 0. Dazu erzeugt die Schalteinrichtung 32 in Abhängigkeit vom Verbraucherstrom I_{M} ein Schaltsignal S_{on/off} für das Stellglied 6. Zur Funktion dieser vorteilhaften Maßnahme wird auf das Diagramm in Fig. 13 hingewiesen. Dort ist beispielhaft ein für Kondensator-Motoren typischer Verbraucherstrom I_{M} dargestellt. Zum Zeitpunkt ϕ₁ bzw. ϕ₃, wenn jeweils der Aussteuergrad von 0 % auf größere Werte übergeht, erfolgt eine Aktivierung (Einschaltung) des Stellgliedes 6 mit dem Steuersignal S_{on/off} = 1. Aktivierung bzw. Einschalten bedeutet dabei, dass das Stellglied 6 vom sperrenden Zustand auf die Vorgabe der Stellerspannung U_{S} = U_{S}' umschaltet. Zum Zeitpunkt ϕ₂ bzw. ϕ₄, wenn der Verbraucherstrom I_{M} bis auf 0 abgesunken ist, erfolgt eine Abschaltung des Stellers durch S_{on/off} = 0, um nach dem Nullwerden des Verbraucherstromes I_{M} einen erneuten Anstieg zu vermeiden, der aufgrund des Verlaufs der inneren Spannung des Motors auftreten würde. Hierdurch verhält sich das Stellglied wie ein statischer Schalter (Triac oder Thyristor), wodurch auch ein Verlauf ähnlich einer Phasenanschnittsteuerung erzeugt werden kann. Der Strom I_{M} kann hierbei entweder der Spannung U_{N} zum Zeitpunkt des Nullwerdens voreilen (kapazitives Verhalten), wie in Fig. 13 gezeigt, oder auch nacheilen (induktives Verhalten).

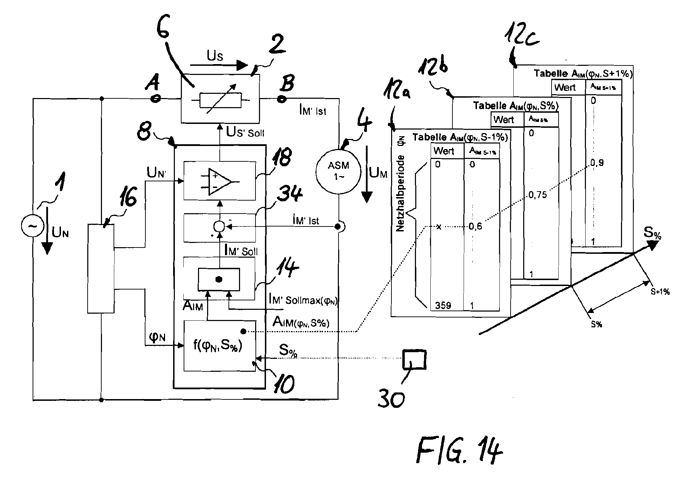

In einer weiteren vorteilhaften Ausgestaltung kann zusätzlich zu dem bisher beschriebenen Verfahren, wobei die Betriebsspannung in Abhängigkeit vom Phasenwinkel ϕ_{N} und dem Stellsignal (Aussteuergrad AM) in unterschiedlichen Verlaufsformen vorgegeben wird, in analoger Weise auch der Verlauf des Verbraucherstromes I_{M} direkt vorgegeben werden, beispielsweise über einen Subtrahierer 34 mit nachgeschaltetem Stromregler 18, der die Ausgabe der Stellerspannung U_{S}' Soll auf die Hüllkurve der Netzspannung U_{N}' begrenzt. Eine solche Weiterbildung ist in Fig. 14 dargestellt. Der Aussteuergrad AM ist ähnlich wie bei der Ausführung gemäß Fig. 8 in Form von Wertetabellen 12a bis 12c in Abhängigkeit vom Stellsignal S als unterschiedliche Funktionen hinterlegt. Hierbei bezieht sich aber der Aussteuergrad nicht direkt auf die Spannung, sondern zunächst auf den Strom-Sollwert I_{M}'. Der Multiplikator 14 berechnet hierfür aus dem hinterlegten Aussteuergrad AM, dem jeweils aktuellen Phasenwinkel ϕ_{N} und dem hinterlegten maximalen Strom I_{M'max} die Vorgabe für den Sollwert des Motorstroms I_{M}', die zum Vergleich mit dem Ist-Wert dem Subtrahierer 34 zugeführt wird. Entsprechend einer Abweichung zwischen Ist-Wert und Soll-Wert des Stromes wird das Stellsignal für das Stellglied 6 nach gängigen regelungstechnischen Verfahren ermittelt. Diese Funktion kann beispielsweise ein analog oder digital ausgeführter PID-Regler übernehmen. Durch Interpolation zwischen den hinterlegten Verläufen des Aussteuergrades ist innerhalb des Stellbereiches eine kontinuierliche Vorgabe des Verbraucherstroms in Abhängigkeit vom Stellsignal S möglich, wie dies auch analog schon für den Fall der Spannungsvorgabe beschrieben wurde. Im gezeigten Beispiel wird das Stellsignal in Form der Spannungsvorgabe U_{S}'_{Soll} innerhalb des Bereiches der momentanen Speisewechselspannung U_{N}' von dem Regler 8 an das Stellglied 6 übergeben.

## Patentansprüche

1. Verfahren zum Umformen einer über ihren Phasenwinkel (ϕ_{N}) insbesondere sinusförmigen Speisewechselspannung (U_{N}) in eine bezüglich ihres Effektivwertes einstellbare Betriebsspannung (U_{M}) für einen Elektromotor (M), insbesondere für einen Einphasen-Asynchronmotor (ASM) zwecks Drehzahlstellung, wobei die Speisewechselspannung (U_{N}) über den Verlauf des Phasenwinkels (ϕ_{N}) bezüglich ihrer jeweiligen Augenblickswerte (U_{N}') anhand mindestens einer vorgegebenen Funktion (f(ϕ_{N}))jeweils um einen in Abhängigkeit vom Phasenwinkel (ϕ_{N}) in einem Bereich von 0 bis 1 vorgegebenen Faktor kontinuierlich veränderbar ist, so dass die Betriebsspannung (U_{M}) über den Phasenwinkel (ϕ_{N}) hinweg mit einem durch die Funktion (f(ϕ_{N})) vorgebbaren Verlauf aus Augenblickswerten (U_{M}') von 0 % bis 100 % der zugehörigen Augenblickswerte (U_{N}') der Speisewechselspannung (U_{N}) generierbar ist, **dadurch gekennzeichnet, dass**
die Speisewechselspannung (U_{N}) über ein bezüglich seiner Leitfähigkeit gesteuert über einen Stellbereich von 0 % bis 100 % auf unterschiedliche Werte und Zwischenwerte veränderbares Stellglied (6) aus zwei entgegengesetzt in Reihe geschalteten Leistungshalbleitern (22,24), beispielsweise MOSFET's in die Betriebsspannung (U_{M}) derart umgeformt wird,
dass der Verlauf der Betriebsspannung (U_{M}) eine Kombination zwischen einer vorwiegend phasenanschnittbasierenden Steuerung und einer vorwiegenden linearen Ansteuerung darstellt und sich die Betriebsspannung (U_{M}) dabei kontinuierlich von dem Verlauf einer Linearsteuerung bei niedrigen Effektivwerten der Spannung zu dem einer Phasenanschnittsteuerung bei hohen Effektivwerten ändert, wobei dem Stellglied (6) über den ganzen Stellbereich der Betriebsspannung hinweg Soll-Augenblickswerte (U_{M}') für die Betriebsspannung (U_{M}) vorgegeben werden, wobei die Soll-Augenblickswerte (U_{M}') durch Multiplikation der jeweiligen Augenblickswerte (U_{N}') der Speisewechselspannung (U_{N}) mit zugehörigen, durch die jeweils vorgegebene Funktion (f(ϕ_{N})) definierten Aussteuergradwerten (A_{M}=f(ϕ_{N})) bestimmtwerden, wobei die Funktion (f(ϕ_{N})) in Form mindestens einer gespeicherten Wertetabellen (12; 12a,b,c) oder eines Algorithmus vorgegeben wird und durch Vorgabe eines Stellsignals (S) die Funktion (f(ϕ_{N})), insbesondere jeweils eine von mehreren gespeicherten Wertetabellen (12a, b, c), auswählbar ist, wobei die Funktion (f(ϕ_{N})), insbesondere jede Wertetabelle (12a, b, c), für einen bezüglich des Effektivwertes unterschiedlichen Phasenverlauf der Betriebsspannung (U_{M}) ausgelegt ist, und wobei eine Überwachung des Phasenverlaufs des durch den Elektromotor (M) fließende, aus der Betriebsspannung (U_{M}) resultierenden Verbraucherstromes (I_{M}) unter Berücksichtigung der jeweiligen Aussteuergradwerte (A_{M}) erfolgt, wobei jeweils das Stellglied (6) zu Zeitpunkten (ϕ₂, ϕ₄) des Phasenwinkels (ϕ_{N}), in denen der Verbraucherstrom (I_{M}) zu Null wird, deaktiviert, und zwar in einen gänzlich sperrenden, hochohmigen Zustand geschaltet und erst dann wieder zur Variation seiner Leitfähigkeit aktiviert wird, wenn die Aussteuergradwerte (A_{M}) von Null auf größere Werte ansteigen.

2. Verfahren nach Anspruch 1,
**dadurch gekennzeichnet, dass** dem Stellglied (6) Sollwerte (Us') für eine am Stellglied (6) abfallende Stellerspannung (Us) vorgegeben werden, wobei die Stellerspannungs-Sollwerte (Us') als Differenz der Augenblicks- werte (U_{N}') der Speisewechselspannung (U_{N}) abzüglich der Soll- Augenblickswerte (U_{M}') der Betriebsspannung (U_{M}) bestimmt werden.

3. Verfahren nach Anspruch 1 oder 2,
**dadurch gekennzeichnet, dass** in einem jeweils zwischen zwei Wertetabellen (12a, b, c) liegenden Stellbereich eine Berechnung der Aussteuergradwerte (A_{M}) durch Interpolation erfolgt.

4. Verfahren nach einem der Ansprüche 1 bis 3,
**dadurch gekennzeichnet, dass** die Betriebsspannung (U_{M}) durch Vorgabe und Auswahl der Wertetabellen (12a, b, c) derart generiert wird, dass über den Stellbereich der Betriebsspannung (U_{M}) hinweg eine Minimierung einer Steller-Verlustleistung sowie eine Minimierung eines Oberschwingungsgehaltes der Betriebsspannung (U_{M}) erreicht werden.

5. Verfahren nach einem der Ansprüche 1 bis 4,
**dadurch gekennzeichnet, dass** die Betriebsspannung (U_{M}) mittelbar über eine Verbraucherstrom-Vorgabe generiert wird.

6. Steuersystem zum Umformen einer über ihren Phasenwinkel (ϕ_{N}) insbesondere sinusförmigen Speisewechselspannung (U_{N}) über eine Stellereinrichtung (2) in eine bezüglich ihres Effektivwertes einstellbare Betriebsspannung (U_{M}) für einen Elektromotor (M), insbesondere für einen Einphasen-Asynchronmotor (M/ASM) zwecks Drehzahlstellung, wobei die Stellereinrichtung (2) aus einem über den Phasenwinkel (ϕ_{N}) hinweg bezüglich seiner Leitfähigkeit gesteuert über einen Stellbereich von 0 % bis 100 % kontinuierlich auf unterschiedliche Werte und Zwischenwerte veränderbaren Stellglied (6) aus zwei entgegengesetzt in Reihe geschalteten Leistungshalbleitern (22,24), beispielsweise MOSFET's besteht und dieses Stellglied (6) von einer Steuereinheit (8) inAbhängigkeit vom Phasenwinkel (ϕ_{N}) der Speisewechselspannung (U_{N}) anhand mindestens einer in einem Speicher (10) abgelegten Funktion (f(ϕ_{N})) mitAussteuergradwerten (A_{M}=f(ϕ_{N})) derart angesteuert wird, dass die Betriebsspannung (UM) über den Phasenwinkel (ϕ_{N}) über den ganzen Stellbereich der Betriebsspannung hinweg mit einem durch die Funktion vorgegebenen Phasenverlauf aus Augenblickswerten (U_{M}') von 0 % bis 100 % von zugehörigen Augenblickswerten (U_{N}') der Speisewechselspannung (U_{N}) generiert wird, **dadurch gekennzeichnet, dass**
der Verlauf der Betriebsspannung (U_{M}) eine Kombination zwischen einer vorwiegend phasenanschnittbasierenden Steuerung und einer vorwiegenden linearen Ansteuerung darstellt und sich die Betriebsspannung (U_{M}) dabei kontinuierlich von dem Verlauf einer Linearsteuerung bei niedrigen Effektivwerten der Spannung zu dem einer Phasenanschnittsteuerung bei hohen Effektivwerten ändert, eine Schalteinrichtung (32), mit der das Stellglied (6) in Abhängigkeit vom Phasenverlauf des aus der. Betriebsspannung (UM) resultierenden Verbraucherstromes (I_{M}) jeweils zu Zeitpunkten (ϕ₂, ϕ₄) des Phasenwinkels (ϕ_{N}), in denen der Verbraucherstrom (I_{M}) zu Null wird über einen bestimmten Phasenwinkelbereich (ϕ₁ - ϕ₃) hinweg deaktivierbar, d. h. in einen gänzlich sperrenden, hochohmigen Zustand schaltbar ist und erst dann wieder zur Variation seiner Leitfähigkeit aktiviert wird, wenn die Aussteuergradwerte (A_{M}) von Null auf größere Werte ansteigen, wobei der Speicher (10) Mittel zur Ablage von mehreren, jeweils für einen bezüglich des Effektivwertes unterschiedlichen Phasenverlauf der Betriebsspannung (U_{M}) ausgelegten Funktionen, insbesondere in Form von Wertetabellen (12a, b, c), aufweist, von denen jeweils eine über Einstellmittel (30) durch Vorgabe eines Stellsignals (S) auswählbar ist.

7. Steuersystem nach Anspruch 6,
**dadurch gekennzeichnet, dass** die/jede in dem Speicher (10) abgelegte Funktion (f(ϕ_{N})) Aussteuergradwerte (A_{M}) als Faktoren im Bereich von 0 bis 1 als Funktion (f (ϕ_{N})) vom Phasenwinkel (ϕ_{N}) der Speisewechselspannung (U_{N}) definiert, wobei die Augenblickswerte (U_{N}') der Speisewechselspannung (U_{N}) über einen Multiplikator (14) mittels der Aussteuergradwerte (AM) veränderbar sind.

8. Steuersystem nach Anspruch 6 oder 7,
**dadurch gekennzeichnet, dass** das Stellglied (6) eine in Reihe mit dem Elektromotor (M) zu schaltende Leistungshalbleiter-Anordnung (20) aufweist, die aus den zwei entgegengesetzt in Reihe geschalteten Leistungshalbleitern (22, 24) besteht.

9. Steuersystem nach einem der Ansprüche 6 bis 8,
ist, wobei die Betriebsspannung (U_{M}) mittelbar über eine Verbraucherstrom-Vorgabe generiert wird.

## Claims

1. A method for transforming an alternating current (AC) supply voltage (U_{N}), which is particularly sinusoidal over its phase angle (ϕ_{N}), into an operating voltage (U_{M}) for an electric motor (M) whose r.m.s. value can be adjusted, particularly for setting the speed of a single-phase asynchronous motor (ASM), wherein the AC supply voltage (U_{N}) can be continuously changed over the distribution of the phase angle (ϕ_{N}) with respect to its respective instantaneous r.m.s. values (U_{N}') based on at least one predetermined function (f(ϕ_{N})) by a predetermined factor within a range from 0 to 1 as a function of the phase angle (ϕ_{N}), such that the operating voltage (U_{M}) can be generated across the phase angle (ϕ_{N}) by a distribution of instantaneous values (U_{M}') that can be predetermined by the function (f(ϕ_{N})) from instantaneous values of 0% to 100% of the associated instantaneous values (U_{N}') of the AC supply voltage (U_{N}) **characterized in that**
the AC supply voltage (U_{N}) is transformed using an actuator (6) that consists of two oppositely series-corrected power semiconductors (22, 24), such as MOSFETs, and whose conductivity can be changed over an adjusting range from 0% to 100% into different values and intermediate values, into the operating voltage (U_{M}) in such a way that the curve of the operating voltage (U_{M}) represents a combination of a predominantly phase angle based control and a predominantly linear activation and that the operating voltage (U_{M}) continuously changes from a linear control profile at low r.m.s. values of voltage to that of a phase angle control at high r.m.s. values, wherein the actuator (6) is given setpoint instantaneous values (U_{M}') for the operating voltage (U_{M}) over the entire adjusting range of the operating voltage, wherein the setpoint instantaneous values (U_{M}') are determined by multiplying the respective instantaneous values (U_{N}') of the AC supply voltage (U_{N}) with associated pulse control values (A_{M}=f(ϕ_{N})) defined by the respective predetermined function (f(ϕ_{N})), wherein the function (f(ϕ_{N})) is predetermined in the form of at least one stored value table (12; 12a, b, c) or an algorithm and the function (f(ϕ_{N})), particularly one of several stored value tables (12a, b, c), can be selected by presetting an actuation signal (S), wherein the function (f(ϕ_{N}),) particularly each value table (12a, b, c), is configured for a different phase characteristic of the operating voltage (U_{M}) with respect to the r.m.s. value, and wherein said phase characteristic of the consumer current (l_{M}) resulting from the operating voltage (U_{M}) and flowing through the electric motor (M) is monitored taking into account the respective pulse control values (A_{M}), wherein the actuator (6) is deactivated, namely, switched into a completely blocking high-resistance state, at the times (ϕ₂, ϕ₄) of the phase angle (ϕ_{N}) in which the consumer current (I_{M}) becomes zero, and is only re-activated for variation of its conductivity when the pulse control values (A_{M}) rise from zero to higher values.

2. The method according to claim 1,
**characterized in that** the actuator (6) is given setpoint values (Us') for an actuator voltage (Us) that drops at the actuator (6), wherein the actuator voltage setpoint values (Us') are determined as the difference of the instantaneous values (U_{N}') of the AC supply voltage (U_{N}) minus the setpoint instantaneous values (U_{M}') of the operating voltage (U_{M}).

3. The method according to claim 1 or 2,
**characterized in that** the pulse control values (A_{M}) are calculated by interpolation in an adjusting range located between two value tables (12a, b, c).

4. The method according to any one of claims 1 to 3,
**characterized in that** the operating voltage (U_{M}) is generated by presetting and selecting the value tables (12a, b, c) such that the actuator power dissipatiorl and a harmonic content of the operating voltage (Ü_{M}) are minimized across the actuating range of the operating voltage (U_{M}).

5. The method according to any one of claims 1 to 4,
**characterized in that** the operating voltage (U_{M}) is generated indirectly based on a consumer current presetting.

6. A control system for transforming an alternating current (AC) supply voltage (U_{N}), which is particularly sinusoidal over its phase angle (ϕ_{N}), using an actuation device (2), into an operating voltage (U_{M}) for an electric motor (M) whose r.m.s. value can be adjusted, particularly for setting the speed of a single-phase asynchronous motor (M/ASM), wherein the actuation device (2) consists of an actuator (6) consisting of two oppositely series-connected power semiconductors (22,24), such as MOSFETs, whose conductivity can be continuously changed over an adjusting range from 0% to 100% into different values and intermediate values, and this actuator (6) is triggered by a control unit (8) depending on the phase angle (ϕ_{N}) of the AC supply voltage (U_{N}) based on at least one function (f(ϕ_{N})) stored in a memory (10) by means of pulse control values (A_{M}=(f(ϕ_{N})) such that the operating voltage (U_{M}) over the phase angle (ϕ_{N}) across the entire adjusting range of the operating voltage is generated with a phase characteristic predetermined by the function of instantaneous values (U_{M}') from 0% to 100% by associated instantaneous values (U_{N}') of the AC supply voltage (U_{N}), **characterized in that**
the characteristic curve of the operating voltage (U_{M}) represents a combination of a predominantly phase angle based control and a predominantly linear activation and that the operating voltage (U_{M}) contiguously changes from a linear control profile at low r.m.s. values of voltage to that of a phase angle control at high r.m.s. values, a switching device (32), with which the actuator (6) can be deactivated, namely, switched into a completely blocking high-resistance state, over a specific phase angle range (ϕ₁ - ϕ₃) at times (ϕ₂, ϕ₄) of the phase angle (ϕ_{N}) in which the consumer current (I_{M}) becomes zero as a function of the phase characteristic of the consumer current (I_{M}) resulting from the operating voltage (U_{M}), and is only re-activated for variation of its conductivity when the pulse control values (A_{M}) rise from zero to higher values,
wherein the memory (10) comprises means for storing multiple functions, each configured for a different phase characteristic of the operating voltage (U_{M}) with respect to its r.m.s. values, particularly in the form of value tables (12a, b, c) one of which can be selected using a setting means (30) by giving an actuation signal (S).

7. The control system according to claim 6,
**characterized in that** the/each function (f (ϕ_{N})) stored in the memory (10) defines pulse control values (A_{M}) as factors in the range from 0 to 1 as function (f (ϕ_{N})) of the phase angle (ϕ_{N}) of the AC supply voltage (U_{N}), wherein the instantaneous values (U_{N}') of the AC supply voltage (U_{N}) can be changed via a multiplier (14) using the pulse control values (A_{M}).

8. The control system according to claim 6 or 7,
**characterized in that** the actuator (6) includes a power semiconductor arrangement (20) to be connected in series with the electric motor (M) which consists of two oppositely series-connected power semiconductors (22,24).

9. The control system according to any one of claims 6 to 8,
**characterized in that** a current controller (18) is connected upstream of the actuator (6), wherein the operating voltage (U_{M}) is generated indirectly based on a consumer current presetting.

## Revendications

1. Procédé servant à transformer une tension alternative d'alimentation (U_{N}) présentant en particulier une forme sinusoïdale sur son angle de phase (ϕ_{N}) en une tension de fonctionnement (U_{M}) pouvant être réglée eu égard à sa valeur effective pour un moteur électrique (M), en particulier pour un moteur asynchrone monophasé (MAM) au moyen d'un réglage de vitesse de rotation, sachant que la tension alternative d'alimentation (U_{N}) peut varier en continu respectivement d'un facteur spécifié en fonction de l'angle de phase (ϕ_{N}) dans une plage allant de 0 à 1 sur l'évolution de l'angle de phase (ϕ_{N}) eu égard à ses valeurs instantanées (U_{N}') respectives à l'aide au moins d'une fonction (f(ϕ_{N})) spécifiée de sorte que
la tension de fonctionnement (U_{M}) peut être générée, au-delà de l'angle de phase (ϕ_{N}), avec une évolution pouvant être spécifiée par la fonction (f(ϕ_{N})), à partir de valeurs instantanées (U_{M}') de 0 % à 100 % des valeurs instantanées (U_{N}') associées de la tension alternative d'alimentation (U_{N}), **caractérisé en ce que**
la tension alternative d'alimentation (U_{N}) est transformée, par l'intermédiaire d'un organe de réglage (6) à conductivité variable commandée sur une plage de réglage allant de 0 % à 100 % de manière à s'établir sur des valeurs et des valeurs intermédiaires différentes, composé de deux semi-conducteurs de puissance (22, 24) montés en série de manière opposée, par exemple de transistors MOSFET, en la tension de fonctionnement (U_{M}) de telle manière que l'évolution de la tension de fonctionnement (U_{M}) constitue une combinaison entre une commande majoritairement à découpage en début de phase et un pilotage majoritairement linéaire et que la tension de fonctionnement (U_{M}) passe dans ce cadre en continu de l'évolution d'une commande linéaire en présence de valeurs effectives basses de la tension à l'évolution d'une commande par découpage en début de phase en présence de valeurs effectives élevées, sachant que des valeurs instantanées théoriques (U_{M}') pour la tension de fonctionnement (U_{M}) sont spécifiées à l'organe de réglage (6) au-delà de l'ensemble de la plage de réglage de la tension de fonctionnement, sachant que les valeurs instantanées théoriques (U_{M}') sont déterminées par la multiplication des valeurs instantanées (U_{N}') respectives de la tension alternative d'alimentation (U_{N}) avec des valeurs de degré de modulation (A_{M} = f(ϕ_{N})) associées définies par la fonction (f(ϕ_{N})) respectivement spécifiée, sachant que la fonction (f(ϕ_{N})) est spécifiée sous la forme au moins d'un tableau de valeurs (12 ; 12a, b, c) mémorisé ou sous la forme d'un algorithme et que la fonction (f(ϕ_{N})), en particulier respectivement un des nombreux tableaux de valeurs (12a, b, c) mémorisées, peut être sélectionnée par la spécification d'un signal de réglage (S), sachant que la fonction (f(ϕ_{N})), en particulier chaque tableau de valeurs (12a, b, c) est configurée pour une évolution de phase, différente eu égard à la valeur effective, de la tension de fonctionnement (U_{M}), et sachant qu'une surveillance de l'évolution de phase du courant de consommation (I_{M}) circulant à travers le moteur électrique (M), résultant de la tension de fonctionnement (U_{M}) est réalisée en tentant compte des valeurs de degré de modulation (A_{M}) respectives, sachant que respectivement l'organe de réglage (6) est désactivé en des points temporels (ϕ₂, ϕ₄)
de l'angle de phase (ϕ_{N}), auxquels le courant de consommation (I_{M}) devient nul, à savoir est commuté dans un état à blocage total, à résistance ohmique élevée et est activé alors seulement à nouveau aux fins de la variation de sa conductivité lors que les valeurs de degré de modulation (A_{M}) augmentent passant de zéro à des valeurs supérieures.

2. Procédé selon la revendication 1,
**caractérisé en ce que** des valeurs théoriques (U_{S}') pour une tension de système régleur (Us) chutant au niveau de l'organe de réglage (6] sont spécifiées à l'organe de réglage (6), sachant que les valeurs théoriques de tension de système régleur (U_{S}') sont déterminées comme la différence des valeurs instantanées (U_{N}') de la tension alternative d'alimentation (U_{N}) moins les valeurs instantanées théoriques (U_{M}') de la tension de fonctionnement (U_{M}).

3. Procédé selon la revendication 1 ou 2,
**caractérisé en ce qu'** un calcul des valeurs de degré de modulation (A_{M}) est réalisé par interpolation dans une plage de réglage située respectivement entre deux tableaux de valeurs (12a, b, c).

4. Procédé selon l'une quelconque des revendications 1 à 3,
**caractérisé en ce que** la tension de fonctionnement (U_{M}) est générée par la spécification et la sélection des tableaux de valeurs (12a, b, c) de telle manière qu'une minimisation d'une puissance de perte de système régleur ainsi qu'une minimisation d'un taux d' harmonique de la tension de fonctionnement (U_{M}) sont atteintes au-delà de la plage de réglage de la tension de fonctionnement (U_{M}).

5. Procédé selon l'une quelconque des revendications 1 à 4,
**caractérisé en ce que** la tension de fonctionnement (U_{M}) est indirectement générée par l'intermédiaire d'une spécification de courant de consommation.

6. Système de commande servant à transformer une tension alternative d'alimentation (U_{N}) présentant en particulier une forme sinusoïdale sur son angle de phase (ϕ_{N}), par l'intermédiaire d'un système régleur (2), en une tension de fonctionnement (U_{M}) pouvant être réglée eu égard à sa valeur effective, pour un moteur électrique (M), en particulier pour un moteur asynchrone monophasé (M/MAM), au moyen d'un réglage de vitesse de rotation, sachant que le système régleur (2) est constitué d'un organe de réglage (6) à conductivité variable commandée, au-delà de la phase d'angle (ϕ_{N}), sur une plage de réglage allant de 0 % à 100 % en continu sur des valeurs et des valeurs intermédiaires différentes, composé de deux semi-conducteurs de puissance (22, 24) montés en série de manière opposée, par exemple de transistors MOSFET, et sachant que ledit organe de réglage (6) est piloté par une unité de commande (8) en fonction de l'angle de phase (ϕ_{N}) de la tension alternative d'alimentation (U_{N}) à l'aide au moins d'une fonction (f(ϕ_{N})) sauvegardée dans une mémoire (10) avec des valeurs de degré de modulation (A_{M} = f (ϕ_{N})) de telle manière que la tension de fonctionnement (U_{M}) est générée sur l'angle de phase (ϕ_{N}) au-delà de l'ensemble de la plage de réglage de la tension de fonctionnement, avec une évolution de phase spécifiée par la fonction, à partir de valeurs instantanées (U_{M}') de 0 % à 100 % de valeurs instantanées (U_{N}') associées de la tension alternative d'alimentation (U_{N}), **caractérisé en ce que**
l'évolution de la tension de fonctionnement (U_{M}) constitue une combinaison entre une commande majoritairement à découpage en début de phase et d'un pilotage majoritairement linéaire, et **en ce que** la tension de fonctionnement (U_{M}) passe dans ce cadre en continu de l'évolution d'une commande linéaire en présence de valeurs effectives basses de la tension à la commande par découpage en début de phase en présence de valeurs effectives élevées, **en ce qu'**un système de commutation (32), avec lequel l'organe de réglage (6) peut être désactivé en fonction de l'évolution de phase du courant de consommation (I_{M}) résultant de la tension de fonctionnement (U_{M}), respectivement à des moments (ϕ₂, ϕ₄) de l'angle de phase (ϕ_{N}), auxquels le courant de consommation (I_{M}) devient nul, au-delà d'une plage d'angle de phase (ϕ₁ - ϕ₃) déterminée, en d'autres termes peut être commuté dans un état à blocage total, à résistance ohmique élevée puis est seulement alors activé à nouveau aux fins de la variation de sa conductivité lorsque les valeurs de degré de modulation (A_{M}) augmentent passant de zéro à des valeurs supérieures, sachant que la mémoire (10) présente des moyens servant à sauvegarder plusieurs fonctions, en particulier sous la forme de tableaux de valeurs (12a, b, c) configurées respectivement pour une évolution de phase, différente eu égard à la valeur effective, de la tension de fonctionnement (U_{M}), dont l'une respectivement peut être sélectionnée par l'intermédiaire de moyens de réglage (30) par la spécification d'un signal de réglage (S).

7. Système de commande selon la revendication 6,
**caractérisé en ce que** la fonction/chaque fonction (f(ϕ_{N})) sauvegardée dans la mémoire (10) définit des valeurs de degré de modulation (A_{M}) en tant que facteurs dans la plage allant de 0 à 1 en tant que fonction (f(ϕ_{N})) de l'angle de phase (ϕ_{N}) de la tension alternative d'alimentation (U_{N}), sachant que les valeurs instantanées (U_{N}') de la tension alternative d'alimentation (U_{N}) peuvent varier par l'intermédiaire d'un multiplicateur (14) au moyen des valeurs de degré de modulation (AM).

8. Système de commande selon la revendication 6 ou 7,
**caractérisé en ce que** l'organe de réglage (6) présente un ensemble de semi-conducteurs de puissance à monter en série (20) avec le moteur électrique (M), lequel est constitué de deux semi-conducteurs de puissance (22, 24) montés en série de manière opposée.

9. Système de commande selon l'une quelconque des revendication 6 à 8,
**caractérisé en ce qu'**un système régleur de courant (18) est monté en amont de l'organe de réglage (6), sachant que la tension de fonctionnement (U_{M}) est générée indirectement par l'intermédiaire d'une spécification de courant de consommation.
